# EUROPÄISCHE PATENTSCHRIFT

(11) **EP 3 366 958 B1**
(45) Veröffentlichungstag und Bekanntmachung des Hinweises auf die Patenterteilung: **20.02.2019**
(21) Anmeldenummer: 17157530.1
(22) Anmeldetag: 23.02.2017
(51) Int. Cl.: F16K 1/42, F16K 31/122, F16K 31/528, F15B 3/00, F16K 1/38, F16K 1/46, F16K 27/02, F16K 31/143, F16K 31/60

(54) **VENTILOBERTEIL**
VALVE TOP
TÊTE DE VANNE

(43) Veröffentlichungstag der Anmeldung: 29.08.2018
(73) Patentinhaber: Flühs Drehtechnik GmbH, 58515 Lüdenscheid (DE)
(72) Erfinder: Thurau, Friedrich, 58849 Herscheid (DE); Schwarzer, Peter, 58566 Kierspe (DE)
(74) Vertreter: Patentanwälte Dörner & Kötter PartG mbB

(56) Entgegenhaltungen:
- DE-U1-202011 100 446
- GB-A- 2 117 472
- US-A- 4 262 879
- US-A1- 2005 098 748
- US-A1- 2006 096 642
- US-A1- 2007 040 140
- US-A1- 2013 334 449
- US-A1- 2016 327 175

## Beschreibung

Die Erfindung betrifft ein Ventiloberteil für Sanitärarmaturen, mit einem Kopfstück, das von einem Steuerkolben axial durchsetzt ist, über den ein Ventilkegel axial betätigbar ist.
Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Ventiloberteile der vorgenannten Art sind in den unterschiedlichsten Ausgestaltungen bekannt. So ist beispielsweise aus der EP 2 522 887 A1 ein Ventiloberteil bekannt, bei dem zur Steuerung des Durchflusses eines Fluids ein Ventilkörper vorgesehen ist, der über eine Spindel innerhalb des Kopfstücks linear bewegbar ist. Hierbei ist eine Spindel drehbar in einem Kopfstück gelagert und über ein Gewinde mit einem verdrehsicher axial in dem Kopfstück geführten Ventilkörper verbunden. Eine Drehung der Spindel bewirkt so eine axiale Bewegung des Ventilkörpers innerhalb des Kopfstücks. US 2006/096642 offenbart ein anderes bekanntes Ventiloberteil.

Bei der Gestaltung von Armaturen wird zunehmend eine Bedienung des Ventiloberteils über Drücker oder Taster gewünscht. Hierzu kommen regelmäßig elektromagnetisch betriebene Ventile zum Einsatz. Nachteilig an diesen Ventiloberteilen ist jedoch, dass die elektromagnetischen Kontakte bei der Verschraubung bzw. Verklebung des Ventiloberteils in Mitleidenschaft gezogen werden können, wodurch die Zuverlässigkeit beeinträchtigt ist. Darüber hinaus erfordern solche Ventile eine zusätzliche Spannungsquelle. Vorteilhaft hat sich bei diesen Ventilen jedoch gezeigt, dass zu deren Betätigung trotz des in der Wasserleitung anliegenden hohen Gegendrucks nur ein geringer Kraftaufwand seitens des Bedieners erforderlich ist.
Hier setzt die vorliegende Erfindung an. Der Erfindung liegt die Aufgabe zu Grunde, ein Ventiloberteil der vorgenannten Art bereitzustellen, das zuverlässig und unempfindlich aufgebaut ist und das ohne das Erfordernis einer zusätzlichen Spannungsquelle, jedoch gleichwohl mit nur geringem Kraftaufwand betätigbar ist. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil bereitgestellt, das zuverlässig und unempfindlich aufgebaut ist und das ohne das Erfordernis einer zusätzlichen Spannungsquelle, jedoch gleichwohl mit nur geringem Kraftaufwand betätigbar ist. Dadurch, dass der Ventilkegel mit einem innerhalb eines zweiten Zylinderraums axial verschiebbar angeordneten Ventilkolben verbunden ist, der auf seiner dem Ventilkegel abgewandten Seite einen ersten Zylinderraum aufweist, in den der Steuerkolben unter Verdrängung eines in den ersten Zylinderraum befindlichen Fluidvolumens hineinbewegbar ist, durch welche Volumenverdrängung in dem ersten Zylinderraum ein Überdruck gebildet ist, wodurch der Ventilkolben bewegbar ist, ist eine fluidische, insbesondere hydraulische Druckübersetzung erzielt, wodurch die auf den Steuerkolben aufgebrachte Betätigungskraft verstärkt wird. Bevorzugt ist der erste Zylinderraum mit einer Hydraulikflüssigkeit gefüllt.

In Weiterbildung der Erfindung ist in dem Kopfstück ein Absatz eingeformt, der den zweiten Zylinderraum begrenzt, in dem der Ventilkolben verschiebbar angeordnet ist, welcher Absatz eine dichtende Führung für den Steuerkolben ausbildet. Hierdurch ist eine einfach herstellbare und zugleich gut abdichtbare Zylinderraumanordnung erzielt.

In Ausgestaltung der Erfindung geht der erste Zylinderraum endseitig des Ventilkolbens in einen durchmesservergrößerten Abschnitt über. Hierdurch ist die wirksame Druckangriffsfläche für das durch den Steuerkolben verdrängte Fluidvolumen erzielt, wodurch das Übersetzungsverhältnis des so gebildeten Druckübersetzers vergrößert ist.

In Weiterbildung der Erfindung ist der Ventilkolben über ein Federelement gegen den Absatz vorgespannt. Hierdurch ist eine automatische Rückführung des Ventilkolbens bei Zurückziehen des Steuerkolbens bewirkt.

In Ausgestaltung der Erfindung ist eine Steuerkappe angeordnet, die entlang des Kopfstücks verschiebbar ist und über die der Steuerkolben betätigbar ist. Hierdurch ist die Bedienbarkeit des Steuerkolbens verbessert.

In weiterer Ausgestaltung der Erfindung ist in die Mantelfläche des Kopfstücks außen wenigstens eine Kurvenbahn eingebracht, in die wenigstens ein an der Steuerkappe angeordneter Führungsstift eingreift. Hierdurch ist eine geführte Bewegung des Steuerkolbens erzielt. Durch eine geeignete Gestaltung der Kurvenbahn ist zudem eine Arretierung des Steuerkolbens in unterschiedlichen Positionen ermöglicht.

In weiterer Ausgestaltung der Erfindung ist die Steuerkappe über ein Federelement in die dem Kopfstück entgegengesetzte Richtung vorgespannt. Hierdurch ist eine automatische Rückführung der Steuerkappe nach Einwirkung einer Betätigungskraft bewirkt.

In Weiterbildung der Erfindung weist die Kurvenbahn in ihrem Verlauf in der Mantelfläche des Kopfstücks unterschiedliche Tiefen auf, wobei der Führungsstift über ein Federelement in Richtung des Kurvenbahngrundes vorgespannt ist. Hierdurch sind eine definierte Bewegungsrichtung sowie unterschiedliche Rastpositionen des Führungsstiftes und damit des mit der Steuerkappe in Verbindung stehenden Steuerkolbens erzielbar.

In Ausgestaltung der Erfindung ist in der Steuerkappe ein Zapfen eingebracht, der axial mit dem Steuerkolben fluchtet, an den er anlegbar ist. Hierdurch ist eine gute Kraftübertragung zwischen Steuerkappe und Steuerkolben erzielt.

In weiterer Ausgestaltung der Erfindung weist der Zapfen an seinem dem Steuerkolben abgewandten Ende einen Anschlusskopf zur Befestigung eines Griffteils auf. Hierdurch ist eine Applikation eines Griffteils auf der Steuerkappe ohne sichtbare Verbindungsstelle ermöglicht.

In weiterer Ausgestaltung der Erfindung weist der Zapfen ein Außengewinde auf, wobei die Steuerkappe mit einer Gewindebohrung versehen ist, durch die der Zapfen durchgeschraubt ist. Hierdurch ist eine Einstellung der Durchflussmenge des Ventiloberteils ermöglicht. Durch eine Drehung des durch die Gewindebohrung durchgeschraubten Zapfens wird eine Längenänderung des durch die Gewindebohrung durchragenden Endes des Zapfens bewirkt, wodurch wiederum die axiale Bewegung des Steuerkolbens bei Betätigung der Steuerkappe und damit das in dem ersten Zylinderraum verdrängte Fluidvolumen einstellbar ist.

In Weiterbildung der Erfindung ist die Steuerkappe außen zumindest bereichsweise umlaufend mit einem Flansch versehen, in dem der wenigstens eine Führungsstift angeordnet ist. Hierdurch ist eine gute Führung des Führungsstiftes erzielt.

In Ausgestaltung der Erfindung ist ein Kegelsitzstück zur dichtenden Anlage des Ventilkegels angeordnet, das lösbar mit dem Kopfstück verbunden ist. Hierdurch ist ein einfacher Austausch des Kegelstücks im Falle eines verschleißbedingten Defektes ermöglicht.

In weiterer Ausgestaltung der Erfindung ist der Ventilkegel formschlüssig, vorzugsweise lösbar mit dem Ventilkolben verbunden. Hierdurch ist eine einfache, vorzugsweise lösbare Befestigung des Ventilkegels an dem Ventilkolben ermöglicht. Die modulare Bestückung des Ventiloberteils mit Ventilkegel und Kegelsitzstück ermöglicht eine individuelle, auf den jeweils gewünschten Wasservolumenstrom ausgerichtete Gestaltung des Ventiloberteils.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Ventiloberteils im Teilschnitt
a) bei betätigter Steuerkappe;
b) in unbetätigter Stellung der Steuerkappe;

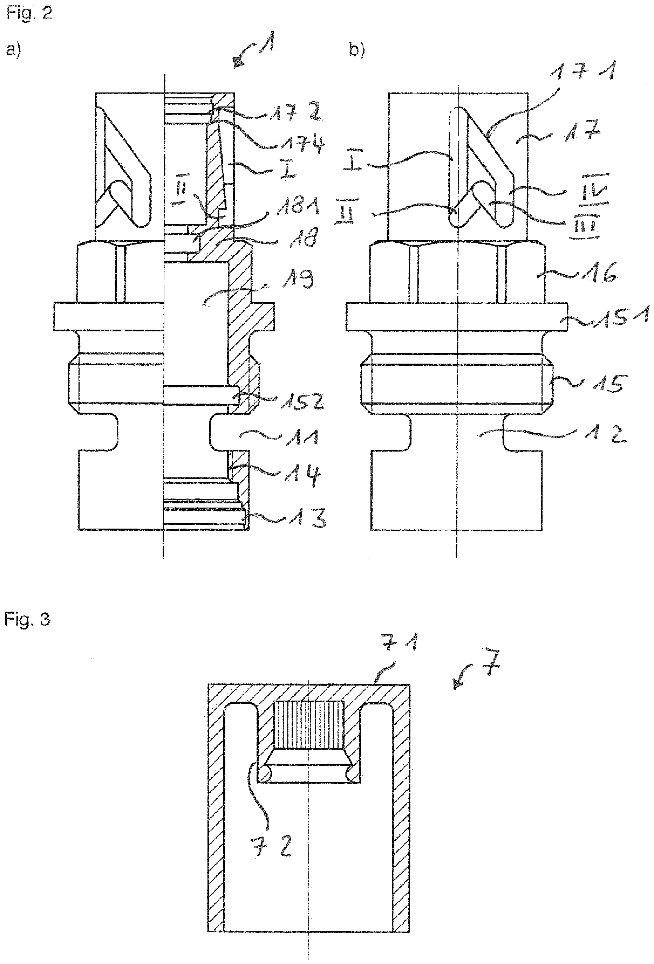

- Figur 2: das Kopfstück des Ventiloberteils aus Figur 1
a) im Teilschnitt;
b) in der Seitenansicht;
- Figur 3: das Griffteil des Ventiloberteils aus Figur 1 im Längsschnitt;

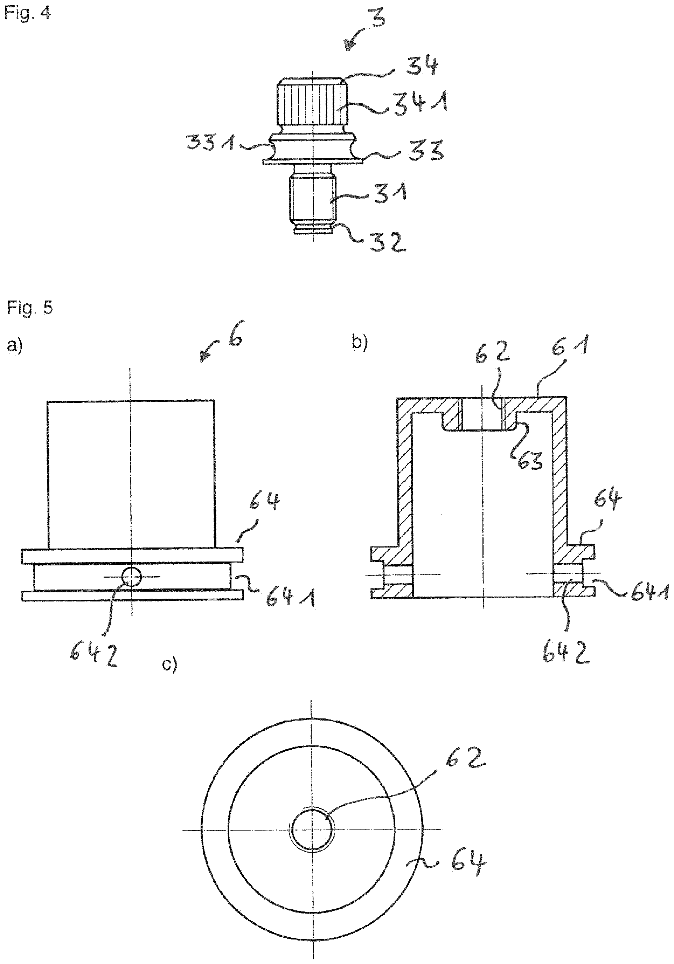

- Figur 4: den Gewindezapfen des Ventiloberteils aus Figur 1;
- Figur 5: die Steuerkappe des Ventiloberteils aus Figur 1;
a) in der Seitenansicht;
b) im Längsschnitt;
c) in der Draufsicht;

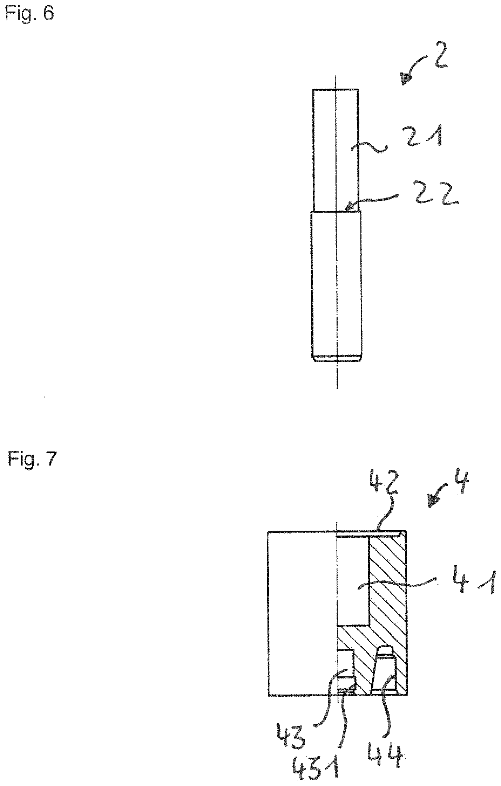

- Figur 6: den Steuerkolben des Ventiloberteils aus Figur 1 in der Seitenansicht;
- Figur 7: den Ventilkolben des Ventiloberteils aus Figur 1 im Teilschnitt;

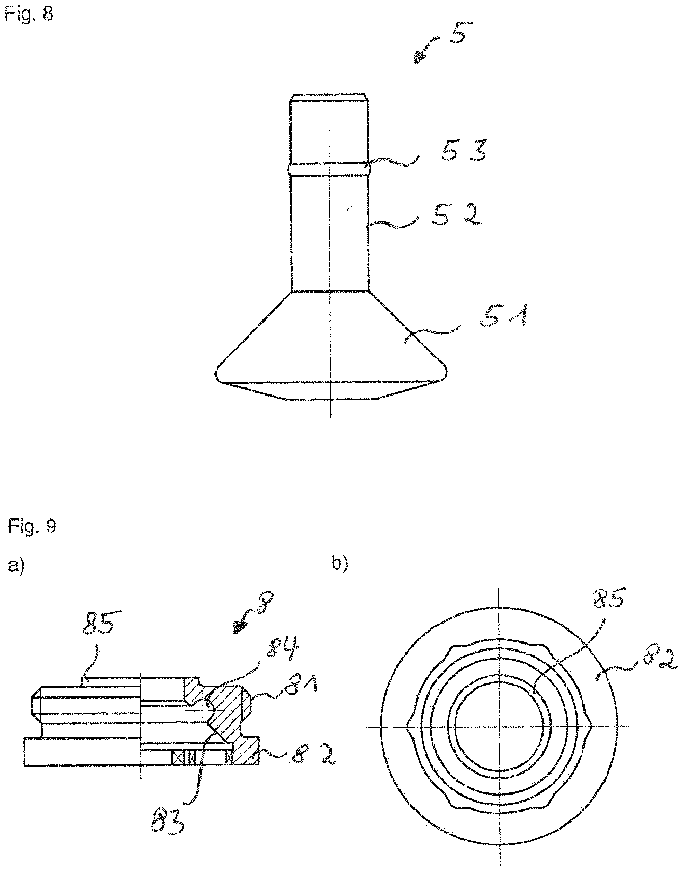

- Figur 8: den Ventilkegel des Ventiloberteils aus Figur 1 in der Seitenansicht;
- Figur 9: das Kegelsitzstück des Ventiloberteils aus Figur 1;
a) im Teilschnitt;
b) in der Draufsicht.

Das als Ausführungsbeispiel gewählte Ventiloberteil weist ein Kopfstück 1 auf, das von einem in ihm axialgeführten Steuerkolben 2 mittig durchsetzt ist. Über den Steuerkolben 2 ist ein Ventilkolben 4 betätigbar, an dem ein Ventilkegel 5 angeordnet ist, der an einem Kegelsitzstück 8 zur Anlage kommt. Zur Betätigung des Steuerkolbens 2 ist an dem Kopfstück 1 eine mit einem Gewindezapfen 3 versehene Steuerkappe 6 axial verschiebbar angeordnet, die mit einem Griffteil 7 versehen ist.

Das Kopfstück 1 besteht aus einem symmetrischen Hohlkörper, dessen beiden Stirnflächen offen sind. Auf seiner der Steuerkappe 6 abgewandten Seite weist das Kopfstück 1 diametral zueinander zwei Durchtrittsfenster 11 auf, die von Längsstegen 12 begrenzt sind. Beabstandet zu den Durchtrittsfenstern 11 ist in dem Kopfstück 1 innen eine Hinterdrehung 13 zur Aufnahme einer Lippendichtung 9 eingebracht. Die Lippendichtung 9 nimmt einen Stützring 91 auf, über den sie in der Hinterdrehung 13 des Kopfstücks 1 gehalten ist.

Unterhalb der Durchtrittsfenster 11 ist in dem Kopfstück 1 ein Innengewinde 14 zum Einschrauben des Kegelsitzstücks 8 angeordnet. Auf seiner dem Innengewinde 14 gegenüberliegenden Seite der Durchtrittsfenster 11 ist das Kopfstück 1 außen mit einem Anschlussgewinde 15 versehen. Mit Hilfe des Anschlussgewindes 15 ist das Kopfstück 1 in das Gehäuse einer Armatur einschraubbar. An das Anschlussgewinde 15 schließt sich ein umlaufender Kragen 151 an, der von einem Mehrkantabschnitt 16 begrenzt ist, an dem sich ein zylindrischer Abschnitt 17 anschließt. Der zylindrische Abschnitt 17 ist an zwei gegenüberliegenden Seiten mit einer Kurvenbahn 171 versehen. Innen ist in Höhe des Mehrkantabschnitts 16 in dem Kopfstück 1 ein Absatz 18 eingeformt, der mit einer radialen Ringnut 181 zur Aufnahme eines Dichtrings 182 versehen ist. Weiterhin ist in dem Kopfstück 1 in Höhe des Anschlussgewindes 15 eine weitere Ringnut 152 zur Aufnahme eines Dichtrings 153 angeordnet.

Endseitig ist in dem zylindrischen Abschnitt 17 des Kopfstücks 1 ein Ab-satz 174 angeordnet, auf dem eine Ringscheibe 175 aufliegt. Die Ringscheibe 175 ist über einen Spannring 173, der in eine benachbarte zum Absatz 174 angeordnete Hinterdrehung 172 eingreift, axial gesichert. Die Spiralfeder 66 liegt auf dem Spannring 173 auf.

Der Steuerkolben 2 ist im Wesentlichen zylindrisch ausgebildet und weist einen Außendurchmesser auf, der im Wesentlichen dem Innendurchmesser des Absatzes 18 des Kopfstücks 1 aufweist, in dem dieser geführt ist. An seinem den Gewindezapfen 3 zugewandten Ende weist der Steuerkolben 2 einen durchmesserreduzierten Abschnitt 21 auf, wodurch ein Absatz 22 gebildet ist.

Der Ventilkolben 4 ist im Wesentlichen zylindrisch ausgebildet und weist einen Außendurchmesser auf, der im Wesentlichen dem Innendurchmesser des innerhalb des Kopfstücks 1 durch den Absatz 18 begrenzten Zylinderraum 19 entspricht. Auf seiner dem Absatz 18 des Kopfstücks 1 zugewandten Seite ist in den Ventilkolben 4 zentrisch ein hohlzylindrischer erster Zylinderraum 41 eingebracht, der endseitig in einen durchmessererweiterten Abschnitt 42 übergeht. Auf seiner dem ersten Zylinderraum 41 gegenüberliegenden Seite ist der Ventilkolben 4 eine mit einer Hinterdrehung 431 versehene zylindrischer Aufnahme 43 für den Ventilkegel 5 eingebracht. Weiterhin ist der Ventilkolben 4 an diesem Ende die Aufnahme 43 umgebend mit einem ringnutförmigen Federsitz 44 versehen.

Der Ventilkegel 5 besteht im Wesentlichen aus einem kegelabschnittförmigen Ventilstempel 51, der an seinen durchmesserreduzierten Ende in einen Anschlusszylinder 52 übergeht, der endseitig mit einer umlaufenden Wulst 53 versehen ist. Der Ventilkegel 5 ist mit dem Anschlusszylinder 52 in die Aufnahme 43 des Ventilkolbens 4 eingesetzt, wobei die Wulst 53 rastend in die Hinterdrehung 431 der Aufnahme 43 hineinragt.

Das Kegelsitzstück 8 ist im Wesentlichen hohlzylindrisch ausgebildet und außen umlaufend mit einem Außengewinde 81 zum Einschrauben in das Innengewinde 14 des Kopfstücks 1 versehen. Beabstandet zu dem Außengewinde 81 ist endseitig ein umlaufender Kragen 82 angeformt. Innen ist in dem Kegelsitzstück 8 ein konisch sich verengender Dichtabschnitt 83 zur dichtenden Anlage des Ventilstempels 51 des Ventilkegels 5 angeordnet. Der Dichtabschnitt 83 ist mit einer Ringnut 84 zur Aufnahme eines Dichtrings 841 versehen. An seinem dem Kragen 82 gegenüberliegenden Ende ist an dem Kegelsitzstück 8 ein durchmesserreduzierter zylindrischer Federsitz 85 angeformt.

Die Steuerkappe 6 ist zylindertopfförmig ausgebildet. In ihre Deckseite 61 ist zentrisch eine Gewindebohrung 62 eingebracht, die durch einen an der Innenseite der Deckseite 61 angeformten Absatz 63 geführt ist. An ihrem der Deckseite 61 entgegengesetzten Ende ist an die Steuerkappe 6 ein umlaufender Flansch 64 angeformt, der mit einer Ringnut 641 versehen ist, in der diametral gegenüberliegend zwei Bohrungen 642 eingebracht sind. In die Bohrungen 642 ist jeweils ein in Richtung der Rotationsachse der Steuerkappe 6 vorgespannter Führungsstift 65 zum Eingriff in eine Kurvenbahn 171 des zylindrischen Abschnitts 17 des Kopfstücks 1 eingebracht.

Der Gewindezapfen 3 umfasst einen zylinderförmig ausgebildeten Gewindestift 31, der endseitig mit einem Einschnitt 32 zur Aufnahme eines Spannrings 321 versehen ist. Auf seiner dem Spannring 321 gegenüberliegenden Seite ist an den Gewindestift 31 ein durchmessererweiterter zylindrischer Abschnitt 33 angeformt der umlaufend mit einem Einstich 331 versehen ist. An den Zwischenabschnitt 33 schließt sich ein im Wesentlichen zylinderförmiger Anschlusskopf 34 an, dessen Außenmantelfläche als Vielkant 341 ausgebildet ist. Der so gestaltete Gewindezapfen 3 ist mit seinem Gewindestift 31 durch die Gewindebohrung 62 der Steuerkappe 6 durchgeschraubt, wobei der zylindrische Abschnitt 33 auf der Deckseite 61 der Steuerkappe 6 aufliegt.

Das Griffteil 7 ist im Wesentlichen zylindertopfförmig ausgebildet. An seiner Deckseite 71 ist innen zentrisch ein Anschlussstück 72 angeformt, dessen Innenkontur im Wesentlichen der Außenkontur des Anschlusskopfs 34 des Gewindezapfens 3 mit angeformten zylindrischen Abschnitt 33 entspricht. Das Griffteil 7 ist auf die Steuerkappe 6 aufgestülpt, wobei der Anschlusskopf 34 mit angeformten Zwischenabschnitt 33 in das Anschlussstück 72 des Griffteils 7 rastend eingebracht ist.

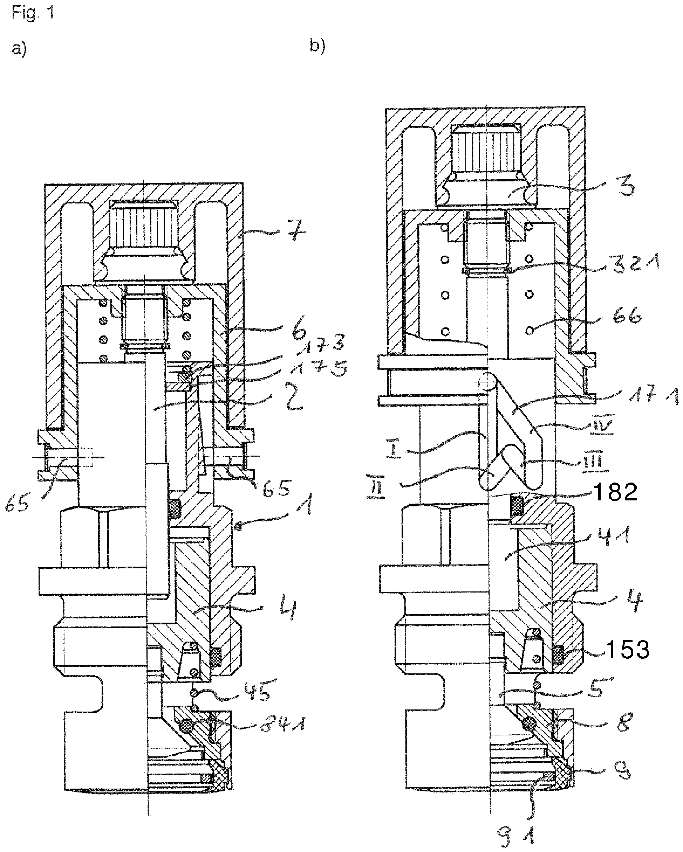

In Figur 1b ist das Ventiloberteil in seiner Ausgangsstellung dargestellt. Hierbei befindet sich die Steuerkappe 6 in der obersten Position, wobei die Führungsstifte 65 der Steuerkappe 6 an dem obersten Punkt der Kurvenbahnen 171 des zylindrischen Abschnitts 17 des Kopfstücks 1 anliegen. Die Steuerkappe 6 ist über eine Spiralfeder 66, die an dem Absatz 63 anliegt gegen das Kopfstück 1 vorgespannt. Hierzu liegt die Schraubenfeder 66 in dem Kopfstück 1 an dem Spannring 173 an, der in die innerhalb des Zwischenabschnitts 17 angeordnete Hinterdrehung 172 eingebracht ist.

Der Steuerkolben 2 liegt mit seinem durchmesserreduzierten Ende zentriert an dem Gewindestift 31 des Gewindezapfens 3 an, dessen Außendurchmesser im Wesentlichen dem Außendurchmesser des durchmesserreduzierten Abschnitt 21 des Steuerkolbens 2 entspricht. Mit seinem gegenüberliegenden Ende ragt der Steuerkolben 2 in den Absatz 18 des Kopfstücks 1 hinein, wo er über den Dichtring 153 gegen den Absatz 18 abgedichtet ist. Der Ventilkolben 4 ist in den Zylinderraum 19 des Kopfstücks 1 eingebracht und liegt an dem Absatz 18 an, gegen den der Ventilkolben 4 über eine Spiralfeder 45 vorgespannt ist. Die Spiralfeder 45 liegt hierzu mit ihrem einen Ende an dem Federsitz 44 des Ventilkolbens 4 und mit ihrem gegenüberliegenden Ende an dem Federsitz 85 des Kegelsitzstücks 8 an. Im Ausführungsbeispiel ist der Zylinderraum 41 des Ventilkolbens 4 mit Wasser als Hydraulikflüssigkeit gefüllt. Der Ventilkolben 4 ist über die in der Ringnut 152 angeordneten Dichtring 182 gegenüber dem Zylinderraum 19 des Kopfstücks 1 abgedichtet. Der Ventilstempel 51 des mit dem Ventilkolben 4 verbundenen Ventilkegels 5 liegt dabei an dem Dichtabschnitt 83 des Kegelsitzstücks 8 an, wo es über den Dichtring 841 gegen das Kegelsitzstück 8 abgedichtet ist.

Bei Drückbetätigung des Griffteils 7 wird die Steuerkappe 6 in Richtung des Mehrkantabschnitts 16 des Kopfstücks 1 bewegt, wobei die Steuerkappe 6 über die Führungsstifte 65 in den Kurvenbahnen 171 des zylindrischen Abschnitts 17 des Kopfstücks 1 geführt ist. Der senkrecht verlaufende Abschnitt I der Kurvenbahn 171 ist dabei in Richtung der Außenmantelfläche des zylindrischen Abschnitts 17 ansteigend ausgebildet, wodurch der in diesem geführte Führungsstift 65 der Steuerkappe 6 entgegen seiner Vorspannung nach außen gedrückt wird. Endseitig mündet dieser Abschnitt I in einen in Richtung der Innenmantelfläche des Absatzes 18 zurückversetzten Abschnitt II der Kurvenbahn 171, in den der vorgespannte Führungsstift 65 einrastet, wodurch eine Zurückbewegung innerhalb des Abschnitts I der Kurvenbahn 171 verhindert ist. Nach Beendigung der Drückbetätigung folgt der Führungsstift 65 bedingt durch die gegen die Steuerkappe einwirkende Vorspannkraft der Spiralfeder 66 dem Verlauf des wiederum in Richtung der Außenmantelfläche des Zwischenabschnitts 17 ansteigenden Abschnitts II der Führungsbahn 171, wo dieser wiederum entgegen seiner Vorspannung nach außen gedrückt wird, bis er in den wiederum in Richtung der Innenmantelfläche des Zwischenabschnitts 17 zurückversetzen Abschnitt III der Kurvenbahn 171 einrastet.

Im Zuge der über die Führungsstifte 65 geführten Bewegung der Steuerkappe 6 wird der Steuerkolben 2, der an dem in die Steuerkappe 6 eingeschraubten Gewindezapfen 3 anliegt, in den gegenüber dem zweiten Zylinderraum 19 abgedichteten ersten Zylinderraum 41 des Ventilkolbens 4 hineinbewegt. Hierdurch wird das innerhalb des ersten Zylinderraums 41 sowie dem daran anschließenden durchmessererweiterten Abschnitt 42 befindliche Hydraulikflüssigkeitsvolumen verdrängt, wodurch ein Überdruck entsteht, durch den der Ventilkolben 4 in Richtung des Kegelsitzstücks 8 gedrückt wird. Bedingt durch die im Verhältnis zur Kopffläche des Steuerkolbens 2 große Grundfläche des ersten Zylinderraums 41, die noch durch die Grundfläche des durchmessererweiterten Abschnitts 42 erweitert ist, ist eine erhebliche Kraftübersetzung bewirkt, wodurch bei leichtem Druck auf das Griffteil 7 auch entgegen einen außen an dem Ventilstempel 51 anliegenden Wasserdruck eine axiale Bewegung des Ventilkolbens 4 mit dem an diesem angeordneten Ventilkegel 5 erzielt, wodurch das Ventil geöffnet wird (vgl. Figur 1a). Die Öffnung des Ventils und damit die gewünschte Wassermenge ist dabei durch Drehung des Griffteils 7 gegenüber der Steuerkappe 6 einstellbar. Dabei wird der drehfest mit dem Griffteil 7 verbundene Gewindezapfen 3 in der Gewindebohrung 62 der Steuerkappe 6 axial bewegt, wodurch die Länge des durch die Steuerkappe 6 hindurchragende Teils des Gewindezapfens 3, der an dem Steuerkolben 2 anliegt, verlängert oder verkürzt wird. Dadurch ist die Eindringtiefe des Steuerkolbens 2 in den Zylinderraum 41 des Ventilkolbens 4 einstellbar.

Bei nochmaliger Drückbetätigung des Griffteils 7 wird die Steuerkappe 6 mit den an dieser angeordneten Führungsstiften 65 entlang dem Abschnitt III der Kurvenbahn 171 bewegt, welche in Richtung der Außenmantelfläche des zylindrischen Abschnitts 17 des Kopfstücks 1 ansteigend ausgebildet ist, bis die vorgespannten Führungsstifte 65 in den in Richtung Innenmantelfläche des zylindrischen Abschnitts 17 zurückversetzt angeordneten Abschnitt V der Kurvenbahn 171 eintauchen. Nach Beendigung des Drückvorgangs wird die Steuerkappe 6 sodann über die Vorspannung der Feder 66 in ihre Ausgangsstellung zurückbewegt, wobei die Führungsstifte 65 dem Abschnitt V der Kurvenbahn 171 folgen, bis sie an dem Kreuzungspunkt des Abschnitts V mit dem Abschnitt I anschlagen (vgl. Figur 1b).

In einer weiteren Ausgestaltung kann die Kurvenbahn 171 weitere Abschnitte umfassen, wodurch mehrere Zwischenhaltepunkte für die Führungsstifte 65 in unterschiedlichen Positionen der Steuerkappe 6 bzw. des an dieser über den Gewindezapfen 3 anliegenden Ventilkolbens 4 realisierbar sind. Hierdurch ist eine Arretierung des Ventiloberteils mit unterschiedlichen Stellungen des Ventilkegels 5, das heißt mit unterschiedlichen Wassermengenströmen realisierbar.

## Patentansprüche

1. Ventiloberteil mit einem Kopfstück (1), das von einem Steuerkolben (2) axial durchsetzt ist, über den ein Ventilkegel (5) axial betätigbar ist, wobei der Ventilkegel (5) mit einem innerhalb eines zweiten Zylinderraums (19) axial verschiebbar angeordneten Ventilkolben (4) verbunden ist, der auf seiner dem Ventilkegel (5) abgewandten Seite einen ersten Zylinderraum (41) aufweist, in den der Steuerkolben (2) unter Verdrängung eines in dem ersten Zylinderraum (41) befindlichen Fluidvolumens hineinbewegbar ist, durch welche Volumenverdrängung in dem ersten Zylinderraum (41) ein Überdruck gebildet ist, wodurch der Ventilkolben (4) bewegbar ist.

2. Ventiloberteil nach Anspruch 1, **dadurch gekennzeichnet, dass** in dem Kopfstück (1) ein Absatz (18) eingeformt ist, der den zweiten Zylinderraum (19) begrenzt und der eine dichtende Führung für den Steuerkolben (2) ausbildet.

3. Ventiloberteil nach Anspruch 1 oder 2, **dadurch gekennzeichnet, dass** der erste Zylinderraum (41) endseitig des Ventilkolbens (4) in einen durchmesservergrößerten Abschnitt (42) übergeht.

4. Ventiloberteil nach Anspruch 2 oder 3, **dadurch gekennzeichnet, dass** der Ventilkolben (4) über ein Federelement (45) gegen den Absatz (18) vorgespannt ist.

5. Ventiloberteil nach einem der vorgenannten Ansprüche, **dadurch gekennzeichnet, dass** eine Steuerkappe (6) angeordnet ist, die entlang des Kopfstücks (1) verschiebbar ist und über die der Steuerkolben (2) betätigbar ist.

6. Ventiloberteil nach Anspruch 5, **dadurch gekennzeichnet, dass** in die Mantelfläche des Kopfstücks (1) außen wenigstens eine Kurvenbahn (171) eingebracht ist, in die wenigstens ein an der Steuerkappe (6) angeordneter Führungsstift (65) eingreift.

7. Ventiloberteil nach Anspruch 5 oder 6, **dadurch gekennzeichnet, dass** die Steuerkappe (6) über ein Federelement (66) in die dem Kopfstück (1) entgegen gesetzte Richtung vorgespannt ist.

8. Ventiloberteil nach Anspruch 6 oder 7, **dadurch gekennzeichnet, dass** die Kurvenbahn (171) in ihrem Verlauf in der Mantelfläche des Kopfstücks (1) unterschiedliche Tiefen aufweist, wobei der Führungsstift (65) über ein Federelement in Richtung des Kurvenbahngrundes vorgespannt ist.

9. Ventiloberteil nach einem der Ansprüche 5 bis 8, **dadurch gekennzeichnet, dass** in die Steuerkappe (6) ein Zapfen (3) eingebracht ist, der axial mit dem Steuerkolben (2) fluchtet, an den er anlegbar ist.

10. Ventiloberteil nach Anspruch 9, **dadurch gekennzeichnet, dass** der Zapfen (3) an seinem dem Steuerkolben (2) abgewandten Ende einen Anschlusskopf (34) zur Befestigung eines Griffteils (7) aufweist.

11. Ventiloberteil nach Anspruch 9 oder 10, **dadurch gekennzeichnet, dass** der Zapfen (3) ein Außengewinde aufweist, wobei die Steuerkappe (6) mit einer Gewindebohrung (62)versehen ist, durch die der Zapfen (3) durchgeschraubt ist.

12. Ventiloberteil nach einem der Ansprüche 6 bis 11, **dadurch gekennzeichnet, dass** die Steuerkappe (6) außen zumindest bereichsweise umlaufend mit einem Flansch (64) versehen ist, in dem der wenigstens eine Führungsstift (65) angeordnet ist.

13. Ventiloberteil nach einem der vorgenannten Ansprüche, **dadurch gekennzeichnet, dass** ein Kegelsitzstück (8) zur dichtenden Anlage des Ventilkegels (5) angeordnet ist, das lösbar mit dem Kopfstück (1) verbunden ist.

14. Ventiloberteil nach einem der vorgenannten Ansprüche, **dadurch gekennzeichnet, dass** der Ventilkegel (5) formschlüssig, vorzugsweise lösbar mit dem Ventilkolben (4) verbunden ist.

## Claims

1. Valve top having a head piece (1), which is axially penetrated by a control piston (2), via which a valve cone (5) can be axially actuated, wherein the valve cone (5) is connected to a valve piston (4) axially movably arranged within a second cylinder chamber (19), which has a first cylinder chamber (41) on its side facing away from the valve cone (5), into which the control piston (2) can be moved displacing a fluid volume located in the first cylinder chamber (41), by which volume displacement an overpressure is formed in the first cylinder chamber (41), whereby the valve piston (4) is movable.

2. Valve top according to claim 1, **characterised in that** a shoulder (18) is moulded in the head piece (1), which delimits the second cylinder chamber (19) and which forms a sealing guide for the control piston (2).

3. Valve top according to claim 1 or 2, **characterised in that** the first cylinder chamber (41) passes into a diameter-enlarged section (42) at the end of the valve piston (4).

4. Valve top according to claim 2 or 3, **characterised in that** the valve piston (4) is prestressed against the shoulder (18) via a spring element (45).

5. Valve top according to one of the previous claims, **characterised in that** a control cap (6) is arranged, which is displaceable along the head piece (1) and via which the control piston (2) can be actuated.

6. Valve top according to claim 5, **characterised in that** in the outside surface of the head piece (1) on the outside at least one cam track (171) is inserted, in which at least one guide pin (65) arranged at the control cap (6) engages.

7. Valve top according to claim 5 or 6, **characterised in that** the control cap (6) is prestressed in the opposite direction of the head piece (1) via a spring element (66).

8. Valve top according to claim 6 or 7, **characterised in that** the cam track (171) has different depths in its run in the mantle surface of the head piece (1), wherein the guide pin (65) is prestressed via a spring element in the direction of the base of the cam track.

9. Valve top according to one of claims 5 to 8, **characterised in that** a pin (3) is inserted in the control cap (6), which is axially aligned with the control piston (2), against which it can be placed.

10. Valve top according to claim 9, **characterised in that** the pin (3) has a connection head (34) for fixing a handle part (7) at its end facing away from the control piston (2).

11. Valve top according to claim 9 or 10, **characterised in that** the pin (3) has an external thread, wherein the control cap (6) is provided with a threaded hole (62), through which the pin (3) is screwed.

12. Valve top according to one of claims 6 to 11, **characterised in that** the control cap (6) is at least partially circumferentially provided with a flange (64) on the outside, in which the at least one guide pin (65) is arranged.

13. Valve top according to one of the previous claims, **characterised in that** a conical seat piece (8) for sealing contact of the valve cone (5) is arranged, which is detachably connected to the head piece (1).

14. Valve top according to one of the previous claims, **characterised in that** the valve cone (5) is form-fittingly, preferably detachably connected to the valve piston (4).

## Revendications

1. Partie supérieure de soupape comprenant une pièce têtière (1) traversée axialement par un piston de commande (2) via lequel un cône (5) de soupape est actionnable axialement, sachant que le cône (5) de soupape est relié à un piston (4) de soupape disposé déplaçable axialement à l'intérieur d'un second volume (19) de cylindre, piston qui sur son côté opposé au cône (5) de soupape présente un premier volume (41) de cylindre dans lequel il est possible d'introduire le piston de commande (2) en refoulant un volume de fluide se trouvant dans le premier volume (41) de cylindre, sachant que le refoulement du volume dans le premier volume (41) de cylindre génère une surpression faisant que le piston (4) de soupape est déplaçable.

2. Partie supérieure de soupape selon la revendication 1, **caractérisée en ce que** dans la pièce têtière (1) a été moulé un épaulement (18) qui délimite le deuxième volume (19) de cylindre et qui configure un guidage étanchéisant pour le piston (2) de commande.

3. Partie supérieure de soupape selon la revendication 1 ou 2, **caractérisée en ce que** le premier volume (41) de cylindre devient, sur le côté terminal du piston (4) de soupape, un segment (42) d'un diamètre accru.

4. Partie supérieure de soupape selon la revendication 2 ou 3, **caractérisée en ce que** le piston (4) de soupape est précontraint contre l'épaulement (18) via un élément ressort (45).

5. Partie supérieure de soupape selon l'une des revendications précédentes, **caractérisée en ce qu'**une coiffe de commande (6) est disposée déplaçable le long de la pièce têtière (1) et que cette coiffe permet d'actionner le piston de commande (2).

6. Partie supérieure de soupape selon la revendication 5, **caractérisée en ce qu'**à l'extérieur dans la surface enveloppante de la pièce têtière (1) a été ménagée au moins une piste curviligne (171) dans laquelle engrène au moins une tige de guidage (65) disposée contre la coiffe de commande (6).

7. Partie supérieure de soupape selon la revendication 5 ou 6, **caractérisée en ce que** la coiffe de commande (6) est précontrainte via un élément ressort (66) dans la direction opposée à la pièce têtière (1).

8. Partie supérieure de soupape selon la revendication 6 ou 7, **caractérisée en ce que** la piste curviligne (171) présente différentes profondeurs sur son tracé dans la surface enveloppante de la pièce têtière (1), sachant que la tige de guidage (65) est précontrainte via un élément ressort en direction du fond de la piste curviligne.

9. Partie supérieure de soupape selon l'une des revendications 5 à 8, **caractérisée en ce que** dans la coiffe de commande (6) a été ménagé un tenon (3) en alignement axial avec le piston de commande (2) contre lequel il est possible de l'appliquer.

10. Partie supérieure de soupape selon la revendication 9, **caractérisée en ce que** le tenon (3) présente sur son extrémité opposée au piston de commande (2) une tête de raccordement (34) servant à fixer une poignée (7).

11. Partie supérieure de soupape selon la revendication 9 ou 10, **caractérisée en ce que** le tenon (3) présente un filetage extérieur, sachant que la coiffe de commande (6) est munie d'un alésage taraudé (62) traversé par le tenon (3) lors du vissage de ce dernier.

12. Partie supérieure de soupape selon l'une des revendications 6 à 11, **caractérisée en ce que** la coiffe de commande (6) est munie, à l'extérieur, d'une bride (64) au moins localement circonférentielle dans laquelle au moins une tige de guidage (65) est disposée.

13. Partie supérieure de soupape selon l'une des revendications précédentes, **caractérisée en ce qu'**une pièce de siège conique (8) est disposée de sorte à permettre au cône (5) de soupape d'appliquer de manière étanchéisante, laquelle pièce est reliée de manière détachable à la pièce têtière (1).

14. Partie supérieure de soupape selon l'une des revendications précédentes, **caractérisée en ce que** le cône (5) de soupape est relié par adhérence de formes, de préférence de manière détachable, avec le piston (4) de soupape.
